# EUROPÄISCHE PATENTSCHRIFT

(11) **EP 2 937 857 B1**
(45) Veröffentlichungstag und Bekanntmachung des Hinweises auf die Patenterteilung: **16.12.2020**
(21) Anmeldenummer: 15156226.1
(22) Anmeldetag: 24.02.2015
(51) Int. Cl.: G10K 9/22, G01S 7/521

(54) **MEMBRAN FÜR EINEN ULTRASCHALLWANDLER UND ULTRASCHALLWANDLER**
MEMBRANE FOR AN ULTRASONIC TRANSDUCER AND ULTRASONIC TRANSDUCER
MEMBRANE POUR UN TRANSDUCTEUR D'ULTRASONS ET TRANSDUCTEUR D'ULTRASONS

(30) Priorität: 24.04.2014 DE 102014207681
(43) Veröffentlichungstag der Anmeldung: 28.10.2015
(73) Patentinhaber: Robert Bosch GmbH, 70442 Stuttgart (DE)
(72) Erfinder: Bartylla, David, 71229 Leonberg (DE); Kariouh, Ahmed, 71229 Leonberg (DE)

(56) Entgegenhaltungen:
- EP-A1- 2 246 401
- EP-A1- 2 592 397
- DE-C1- 4 230 773
- JP-A- 2007 060 340
- US-A- 4 322 877
- US-A1- 2004 175 951

## Beschreibung

### Stand der Technik

Die vorliegende Erfindung betrifft eine Membran für einen Ultraschallwandler und einen Ultraschallwandler für ein Fahrzeug.

Ultraschallwandler werden bei Kraftfahrzeugen zum Beispiel für eine Einparkhilfe eingesetzt. Die Einparkhilfe umfasst beispielsweise ein Steuergerät und Abstandssensoren, die mit derartigen Ultraschallwandlern versehen sind. Derartige Ultraschallwandler bestehen im Allgemeinen aus einem Membrantopf und einem darin angeordneten Wandlerelement. Der Membrantopf wird üblicherweise aus einem metallischen Werkstoff, wie zum Beispiel Aluminium, geformt oder gefräst. Das elektromechanische Wandlerelement (z.B. ein Piezoelement) wird auf den Boden des Membrantopfes, aufgebracht, beispielsweise geklebt, und kontaktiert. Das Wandlerelement regt den Membrantopf zu Schwingungen an, wodurch in bekannter Weise Ultraschallwellen abgestrahlt werden. Einfallende Ultraschallwellen können ebenfalls Schwingungen des Membrantopfes anregen, wodurch wiederrum im Wandlerelement entsprechende Spannungssignale erzeugt werden.

Ultraschallwandler in Abstandssensoren werden nunmehr seit 20 Jahren zur Unterstützung des Fahrers bei Einparkvorgängen genutzt. Es zeigt sich hierbei, dass der Einsatz in unterschiedlichen Temperaturbereichen erfolgt. Temperaturen von -40°C sind in einigen Bereichen der Welt durchaus gängig.

Im Betrieb und während einer Abkühlung des Ultraschallwandlers wird das Wandlerelement, das die Membran zu Schwingungen anregt und das üblicherweise als eine Piezokeramik ausgebildet ist, durch Schubspannungen beansprucht. Die Klebeschicht, die sich zwischen der Piezokeramik und der Membran befindet, wird an den Fügestellen mechanisch stark beansprucht. Insbesondere im Falle einer Membran, die vor dem Fügevorgang kontaminiert war, kann es zu Ablösungen der Klebschicht von der Membranoberfläche kommen. Ein Ausfall des Sensors ist die Folge.

Aus der DE 10 2006 026 674 A1 ist bekannt, dass die Piezokeramik mindestens eine metallisierte Oberfläche aufweist, die mindestens ein weiteres Element oder Verbindung mit einem Schmelzpunkt größer als 1800 Grad Celsius aufweist. Diese Dotierung der metallisierten Oberfläche führt zu Oberflächendeformationen, die eine Verbindung der Piezokeramik mit der Membran unterstützen. Die Partikel bilden so genannte "Spikes" auf der metallisierten Oberfläche. Ein Pressen zwischen der Membranfläche und der Piezokeramik führt zum Eindringen der Dotierungsmaterialien in die Membran und deren Verankerung unter Ausbildung einer Verbindung zwischen der Membranfläche und der Piezokeramik, wodurch die Haftung verbessert wird.

Aus der DE 10 2011 080 125 A1 ist die gezielte Strukturierung einer Elektrode eines Schallwandlers bekannt. Dadurch werden Hohlräume mit unterschiedlichen Volumina gebildet, wobei ein größeres Volumen zu einer geringen Steifigkeit der Membran führt und dadurch in einer niedrigeren Resonanzfrequenz resultiert.

Aus der DE 10 2005 061 343 B4 ist ein mikrosystemtechnisch aufgebauter Ultraschallwandler mit einer piezoaktiven Wandlerschicht bekannt, die mittels einer Kontaktierungsschicht auf einem Substrat aufgebracht ist, wobei zwischen der Kontaktierungsschicht und dem Substrat eine Anpassschicht zur akustischen Impedanzanpassung an ein Ankoppelmedium angeordnet ist. Sowohl die die piezoaktive Wandlerschicht als auch die Kontaktierungsschicht können zur besseren Kontaktierung und zur Definition der Schall abstrahlenden Apertur strukturiert werden. Die Strukturierung kann z.B. über fotolithografische Maskierungsverfahren, Ätzverfahren wie auch durch mechanische Bearbeitung erfolgen.

Das Dokument EP 2 246 401 A1 beschreibt eine Membran, wobei die Membran auf einer Innenfläche einen Wandlerabschnitt aufweist, auf den ein Wandlerelement, insbesondere ein piezokeramisches Element, befestigbar ist. Die Membran ist als Boden eines Aluminiumtopfes ausgebildet, der eine "relativ rauhe Oberfläche" hat.

Das Dokument DE 42 30 773 C1 beschreibt eine Membran an der eine piezoelektrische Sende-/Empfangseinheit befestigt ist. Die Befestigung erfolgt mittels einer Klebeschicht, wobei die Klebeschicht in einem Randbereich eine im Vergleich zu einem Zentralbereich erhöhte Dicke aufweist. Dies wird durch eine zentrale Erhebung der Membran erreicht.

Das Dokument DE 42 30 773 C1 offenbart einen Ultraschallwandler mit einem Membrantopf-Gehäuse und einem darin befestigten Keramikschwinger. Dabei wird durch Sandstrahlen eine rauhe Oberfläche des Membrantopfes geschaffen.

Das Dokument US 4,322,877 beschreibt ein Verfahren zur Herstellung einer Wandlerfolie, die dünn genüg ist um aufgerollt gelagert zu werden. Die Folie weist eine Mehrzahl von hügelartigen Strukturen auf.

Das Dokument JP2007-060340 A beschreibt, dass eine Oberfläche einer Membran, zur Verbesserung der Haftung eines Wandlerelements durch Methoden wie Sandstrahlen oder chemisches Ätzen aufgeraut wird.

Das Dokument US 2004/0175951 A1 beschreibt eine Trägereinheit für eine chemisch mechanische Poliervorrichtung, die eine flexible Membran aufweist, welche als Aufnahmemittel des zu polierenden Substrats dient. Die Kraft, die während des Poliervorgangs auf das Substrat wirkt, kann durch einen einstellbaren Druck innerhalb einer Kammer der Trägereinheit eingestellt werden. Ein zentraler Bereich der Membran weist eine Strukturierung auf.

### Offenbarung der Erfindung

Die Erfindung hat das Ziel, die Haftfestigkeit der Klebeschicht auf der Membran auf einfache Weise zu verbessern und damit die Beständigkeit und Lebensdauer eines entsprechend ausgebildeten Ultraschallsensors zu erhöhen. Erfindungsgemäß wird dies durch eine Strukturierung der Membran entsprechend dem unabhängigen Anspruch 1 erzielt. I

Es wird eine Membran für einen Ultraschallwandler, insbesondere für ein Fahrzeug, vorgeschlagen, wobei die Membran auf einer Innenfläche einen Wandlerabschnitt aufweist. Unter dem Wandlerabschnitt wird der Bereich der Membran verstanden, auf den ein Wandlerelement, wie z.B. ein piezokeramisches Element, befestigbar ist. Der Wandlerabschnitt ist bevorzugt zentral auf der Membran ausgebildet. Es sind aber auch Ausführungen denkbar, bei denen der Wandlerabschnitt dezentral in Bezug auf die Membranfläche ausgebildet ist. Es ist auch möglich mehrere Wandlerabschnitte vorzusehen.

Erfindungsgemäß weist ein Wandlerabschnitt eine Strukturierung auf. Durch die Strukturierung wird eine Vergrößerung der Oberfläche der Membran im Bereich des Wandlerabschnitts erzielt. Dadurch wird eine Verbesserung der Haftwirkung einer Klebeschicht, mit der ein Wandlerelement mit der Membran verbunden werden kann, erreicht. Dieser Effekt kann unterstützt werden, indem bevorzugt die Seitenwände der Nuten und/oder Erhebungen relativ zu einer Flächennormale des Wandlerabschnitts geneigt ausgebildet sind.

Erfindungsgemäß weist die Strukturierung Nuten und/oder Erhebungen auf, die radial angeordnet sind, sich also von einem zentralen Bereich des Wandlerabschnitts nach außen in Richtung des Randes der Membran hin erstrecken. Eine derartige Strukturierung kann während der Herstellung der Membran oder nachträglich durch entsprechende Verfahren, wie Prägen oder Kratzen eingefügt werden. Es können beliebig viele Nuten bzw. Erhebungen vorgesehen sein, auch die Breite ist beliebig wählbar. Eine erhöhte Haftfestigkeit wird hierbei durch die Erhöhung der für die Klebeschicht zur Verfügung stehenden Oberfläche erreicht.

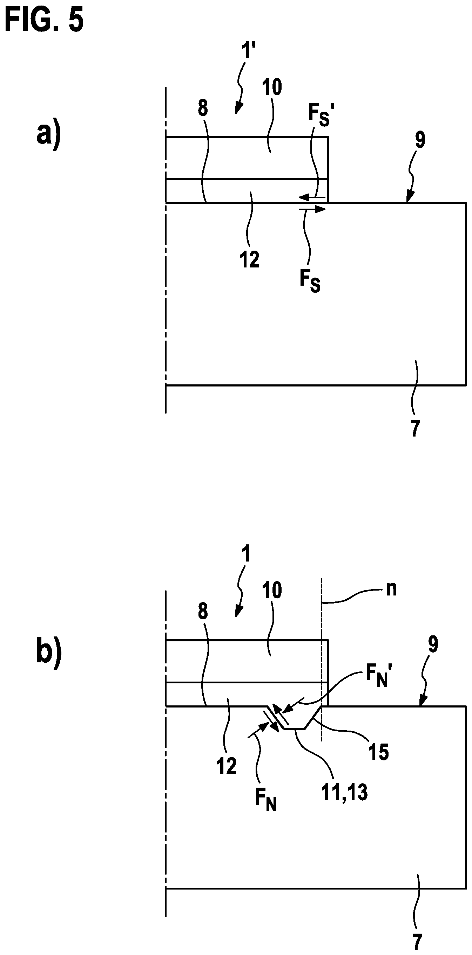

In einem nicht erfindungsgemäßen Beispiel weist die Strukturierung Nuten und/oder Erhebungen auf, die als, insbesondere konzentrische, Ringe ausgebildet sind. Mit anderen Worten sind die Nuten und/oder Erhebungen, die die Strukturierung ausbilden, tangential angeordnet. Neben einer Erhöhung der für die Klebeschicht zur Verfügung stehenden Oberfläche wirkt, tritt hierbei der Effekt auf, dass Kräfte, die durch die Beanspruchung im Betrieb eines Ultraschallsensors und bei Temperaturwechseln wirken, meist in radialer Richtung wirken. Bei einer Strukturierung durch Nuten und/oder Erhebungen in tangentialer Ausrichtung, werden die zwischen der Klebeschicht und der Membran wirkenden Schubkräfte an den Nuten bzw. Erhebungen anteilig in Normalkräfte umgewandelt (siehe Figur 5 b)). Es werden dadurch Normalkräfte auf die Seitenwände der Strukturierung ausgeübt, die eine zusätzliche Erhöhung der Haftfestigkeit der Klebeschicht an der Membran bewirken.

In einer bevorzugten Ausführung weist die Strukturierung sowohl tangential als auch radial angeordnete Nuten und/oder Erhebungen auf.

In einem nicht erfindungsgemäßen Beispiel ist die Strukturierung als zufällig strukturierte bereichsweise oder vollständige Aufrauhung des Wandlerabschnitts ausgebildet. Eine derartige Aufrauhung kann beispielsweise durch ein Bürstverfahren oder Laserverfahren in einfacher Weise in die Membran eingebracht werden.

Es ist im Rahmen der Erfindung ebenfalls denkbar, sowohl zufällige strukturierte Bereiche, als auch eine Strukturierung in Form von Nuten und/oder Erhebungen auf einem Wandlerabschnitt der Membran vorzusehen.

Eine erfindungsgemäße Membran ist bevorzugt als Teil eines Membrantopfs ausgebildet, wobei die Membran den Boden des Membrantopfes ausbildet. Derartige Membrantöpfe werden üblicherweise in Ultraschallsensoren in Fahrzeugen eingesetzt, so dass in vorteilhafter Weise bestehende Halterungen oder Gehäusestrukturen mit einer erfindungsgemäßen Membran genutzt werden können, bzw. eine erfindungsgemäße Membran ohne Schwierigkeiten in einem üblichen Ultraschallsensor verbaut werden kann.

Die Erfindung betrifft außerdem ein Verfahren zur Herstellung einer Membran, die wie oben beschrieben ausgebildet ist. Dabei ist vorgesehen, dass die Strukturierung nachträglich, beispielsweise durch ein Bürstverfahren und/oder ein Kratzwerkzeug und/oder durch Einprägen in den Wandlerabschnitt der Membran eingebracht wird. Alternativ oder zusätzlich kann eine Strukturierung bereits bei der Herstellung der Membran ausgebildet werden, zum Beispiel beim Fließpressen eines Membrantopfes aus Aluminium. Die Membran kann außerdem alternativ oder zusätzlich im Nachgang durch ein Laserverfahren strukturiert werden.

Die Erfindung betrifft außerdem einen Ultraschallwandler umfassend eine Membran, die wie oben beschrieben ausgebildet ist und ein Wandlerelement, wobei das Wandlerelement mittels einer Klebeschicht auf dem die Strukturierung aufweisenden Wandlerabschnitt auf der Innenfläche der Membran befestigt ist. Das Wandlerelement kann beispielsweise als piezokeramisches Wandlerelement ausgebildet sein. Das Wandlerelement wandelt angelegte Spannungssignale in Schwingungen um, die es auf die Membran überträgt. Die Membran strahlt entsprechende Schallsignale ab. Einfallende Ultraschallwellen können ebenfalls Schwingungen des Membrantopfes anregen, wodurch wiederrum im Wandlerelement entsprechende Spannungssignale erzeugt werden. Ein derartiger Ultraschallwandler kann vorteilhaft für einen Ultraschallsensor eingesetzt werden, bei dem auch bei häufigen Temperaturwechseln und großen Temperaturschwankungen eine zuverlässige Haftung des Wandlerelements an der Membran vorliegt.

Bevorzugt umfasst die Membran als wesentlichen Bestandteil Aluminium. Die Klebeschicht, mit der das Wandlerelement auf den strukturierten Wandlerabschnitt der Membran verbunden ist, umfasst bevorzugt einen Klebstoff, der anaerob oder durch gezielte Aktivierung aushärtet. Dabei kann ein Wärmeprozess die Aushärtung unterstützen. Typische Vertreter sind Epoxidharze.

Kurze Beschreibung der Zeichnungen
Figur 1 zeigt schematisch einen Schnitt durch ein Ausführungsbeispiel eines erfindungsgemäßen Ultraschallwandlers mit einem Membrantopf und einem piezokeramischen Wandlerelement.
Figur 2 zeigt schematisch in Draufsicht ein erstes Ausführungsbeispiel einer erfindungsgemäß ausgebildeten Membran für einen Ultraschallwandler.
Figur 3 zeigt schematisch in Draufsicht ein zweites Ausführungsbeispiel einer nicht erfindungsgemäß ausgebildeten Membran für einen Ultraschallwandler.
Figur 4 zeigt schematisch in Draufsicht ein drittes Ausführungsbeispiel einer erfindungsgemäß ausgebildeten Membran für einen Ultraschallwandler.
Figur 5 a) zeigt schematisch einen Schnitt durch einen Ultraschallwandler nach dem Stand der Technik.
Figur 5 b) zeigt schematisch einen Schnitt durch einen erfindungsgemäß ausgebildeten Ultraschallwandler.

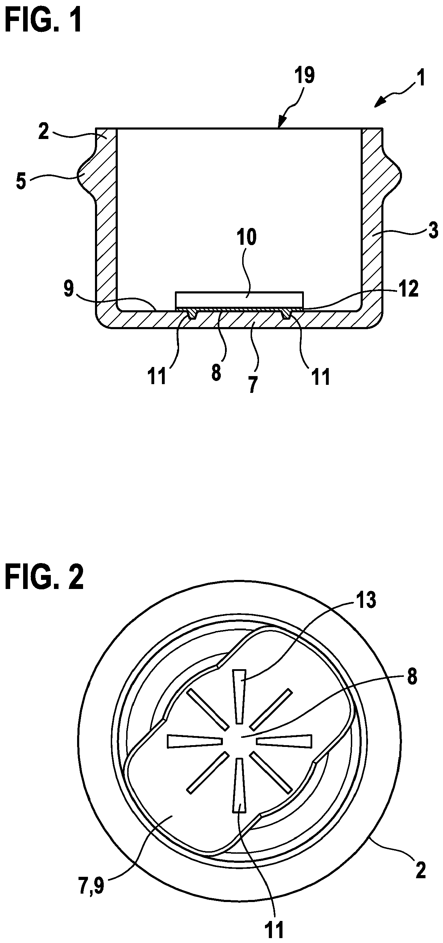

In Figur 1 ist ein Ausführungsbeispiel eines erfindungsgemäßen Ultraschallwandlers im Schnitt schematisch dargestellt. Ein Membrantopf 2, vorzugsweise in zylindrischer Form, weist eine umlaufende Wand 3 mit einer unten liegenden Membran 7 auf. Weiterhin besitzt der Membrantopf 2 an seiner Oberseite eine Öffnung 19, die zum Beispiel eine bestimmte Kontur aufweist. An der Außenseite des Membrantopfes 2 ist in der Nähe der Öffnung 19 eine Verdickung 5 angeordnet, welche beispielsweise zur Verbindung mit einem nicht gezeigten Halteelement und/oder Entkopplungsring vorgesehen ist. Der Membrantopf 2 ist in diesem Beispiel ein fließgepresstes Aluminiumteil. Alternativ kann der Membrantopf 2, wie aus dem Stand der Technik bekannt, auch noch zusätzliche Strukturen aufweisen, beispielsweise um das Schwingungsverhalten und die Resonanzfrequenzen anwendungsspezifisch zu optimieren.

Die umlaufende Wand 3 des Membrantopfes 2 umschließt einen Innenraum, innerhalb dessen auf der Innenseite 9 der Membran 7 ein Wandlerelement 10, zum Beispiel ein piezokeramischer Wandler, mittels einer Klebeschicht 12 in einem Wandlerabschnitt 8 der Membran 7 aufgebracht ist. Der Wandlerabschnitt 8 ist konzentrisch um die Mittelachse des Membrantopfs 2 angeordnet, und von einem Randabschnitt umgeben. Erfindungsgemäß weist die Membran 7 im Bereich des Wandlerabschnitts 8 eine Strukturierung 11 auf. Durch die Strukturierung 11 wird die für die Haftung einer der Klebschicht auf der Membran 7 verbessert wird.

In Figur 2 ist eine erfindungsgemäß ausgebildete Membran 7 in Draufsicht dargestellt. Die Darstellung ist so gewählt, dass die Innenfläche 9 der Membran 7 sichtbar ist. Die Membran 7 ist in diesem Beispiel als Bodenfläche eines Membrantopfes 2 ausgebildet. Die Membran 7 weist einen zentral angeordneten Wandlerabschnitt 8 auf. Der Wandlerabschnitt 8 ist als derjenige Bereich auf der Innenfläche 9 der Membran 7 definiert, auf den ein, beispielsweise als Piezokeramik ausgebildetes, Wandlerelement aufgebracht werden kann, um einen erfindungsgemäßen Ultraschallwandler aufzubauen. Erfindungsgemäß weist der Wandlerabschnitt 8 der Membran 7 eine Strukturierung 11 auf. Die Strukturierung 11 ist in diesem Ausführungsbeispiel als acht Nuten 13 ausgebildet, die sich sternförmig oder mit anderen Worten radial aus einem mittigen Bereich des Wandlerabschnitts 8 erstrecken. Wie in der Darstellung nach Figur 2 angedeutet, können die Nuten 13 eine über ihre Länge gleichbleibende oder veränderliche Breite aufweisen. Abwandlungen dieses Ausführungsbeispiel können auch mehr oder weniger als acht radial angeordnete Nuten 13 vorsehen. Ferner auch kann die Länge und/oder Tiefe der Nuten 13 variieren. Zusätzlich oder alternativ zu den Nuten 13 kann eine radiale Strukturierung 11 auch Erhebungen aufweisen.

Die Strukturierung 11 weist bevorzugt Seitenwände 15 (siehe Figur 5 b)) auf, die schräg, also geneigt im Bezug auf eine Flächennormalen des Wandlerabschnitts ausgebildet sind. Damit wird eine zusätzliche Vergrößerung der Oberfläche erzielt, an der eine Klebeschicht haften kann.

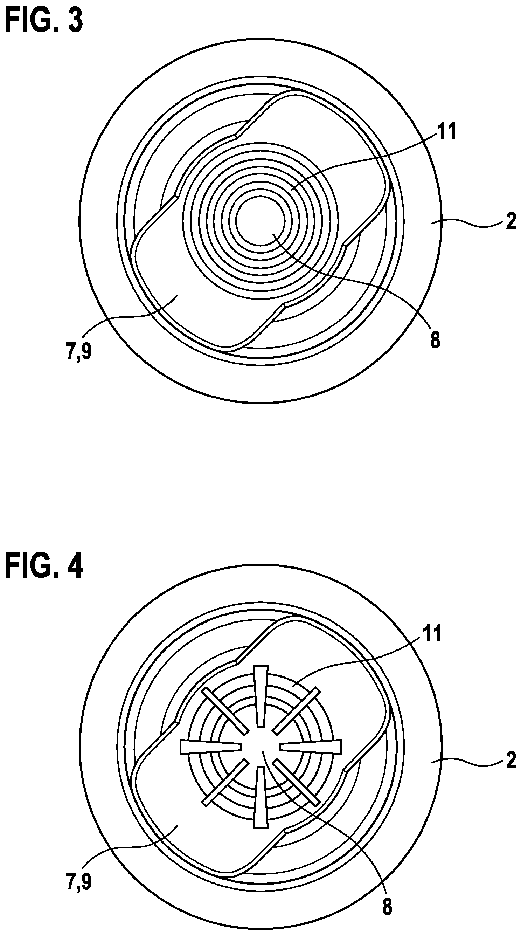

In Figur 3 ist eine alternative Ausführung einer nicht erfindungsgemäß ausgebildeten Membran 7 in Draufsicht dargestellt. Die Darstellung ist so gewählt, dass die Innenfläche 9 der Membran 7 sichtbar ist. Die Membran 7 ist in diesem Beispiel als Bodenfläche eines Membrantopfes 2 ausgebildet. Die Membran 7 weist einen zentral angeordneten Wandlerabschnitt 8 auf. Der Wandlerabschnitt 8 ist als derjenige Bereich auf der Innenfläche 9 der Membran 7 definiert, auf den ein, beispielsweise als Piezokeramik ausgebildetes, Wandlerelement aufgebracht werden kann, um einen erfindungsgemäßen Ultraschallwandler aufzubauen. Der Wandlerabschnitt 8 der Membran 7 weist eine Strukturierung 11 auf. Die Strukturierung 11 ist in diesem Ausführungsbeispiel als vier Nuten 13 ausgebildet, die als konzentrische Ringe ausgebildet sind. Mit anderen Worten sind die Nuten tangential auf dem Wandlerabschnitt 8 angeordnet. Abwandlungen dieses Ausführungsbeispiel können auch mehr oder weniger als vier kreisförmige, konzentrische angeordnete Nuten 13 vorsehen. Ferner auch kann die Länge und/oder Tiefe der Nuten 13 variieren. Zusätzlich oder alternativ zu den Nuten 13 kann eine tangentiale Strukturierung 11 auch Erhebungen aufweisen. Der Vorteil der tangentialen Strukturierung besteht darin, dass Kräfte, die bei temperaturbedingter Ausdehnung bzw. Schrumpfung zwischen der Membran und einer Klebeschicht auftreten, hauptsächlich in radialer Richtung wirken. Ist eine tangentiale Strukturierung 11 vorhanden, wird an den Nuten 13 ein Teil der Schubkräfte zwischen Klebschicht und Membran in Normalkräfte umgewandelt (siehe Figur 5 b)). Diese Normalkräfte, die in diesem Fall als Druckkräfte wirken, erhöhen die Haftfestigkeit zwischen Membran und Klebeschicht zusätzlich und so dass insgesamt wesentlich höhere Beanspruchungen möglich sind, ohne das eine Ablösung der Klebeschicht von der Membran 7 erfolgt. Man spricht in diesem Zusammenhang auch von einer "Verkrallung" des Klebstoffs mit der Strukturierung 11.

Figur 4 zeigt ein weiteres Ausführungsbeispiel einer erfindungsgemäß ausgebildeten Membran 7. Hierbei umfasst die Strukturierung 11 des Wandlerabschnitts 8 der Membran 7 sowohl tangential als auch radial verlaufende Nuten 13, die insbesondere schräge Seitenwände aufweisen. Damit können radial wirkende Kräfte vorteilhaft aufgenommen werden, wie im Zusammenhang mit Figur 3 und Figur 5b) beschrieben ist. Außerdem wird die für die Klebeschicht 12 zur Verfügung stehende Oberfläche des Wandlerabschnitts 8 weiter vergrößert und so die Haftwirkung zwischen Membran 7 und Klebeschicht 12 erhöht.

In Figur 5 b) ist schematisch ein erfindungsgemäßer Ultraschallwandler 1 ausschnittsweise im Schnitt dargestellt. Demgegenüber zeigt Figur 5 a) einen Ultraschallwandler 1' gemäß dem Stand der Technik. Dargestellt ist in beiden Figuren 5 a) und 5b) eine Membran 7 mit einem Wandlerabschnitt 8 auf einer Innenfläche 9 der Membran 7. Auf dem Wandlerabschnitt 8 ist eine Klebeschicht 12 angeordnet, die ein piezoelektrisches Wandlerelement 10 mit der Membran 7 verbindet. Bei Temperaturänderung treten aufgrund der verschiedenen Ausdehnungskoeffizienten Materialien der Membran 7, der Klebeschicht 12 und des Wandlerelements 10 Schubkräfte (angedeutet durch die Pfeile F_{S}, F_{S}') auf, die dazu führen können, dass die Klebeschicht 12 nicht mehr an der Membran 7 haftet.

Der Ultraschallwandler 1 in Figur 5 b) weist außerdem erfindungsgemäß eine Strukturierung 11 des Wandlerabschnitts 8 auf. Die Strukturierung 11 ist in diesem Beispiel als tangentiale Nut 13 mit schrägen Seitenwänden 15 ausgebildet, wobei unter schräg eine Neigung der Seitenwand 15 relativ zu einer Flächennormalen n des Wandlerabschnitts 8 verstanden wird. An den schrägen Seitenwänden 15 werden die Schubkräfte F_{S}, F_{S}' in ihre Komponenten senkrecht (normal) und parallel zu den Seitenwänden 15 aufgespalten. Die Normalkomponenten (angedeutet durch die Pfeile F_{N}, F_{N}') üben eine Druckwirkung auf die schrägen Seitenwände 15 aus und bewirken damit, dass die Haftfestigkeit zwischen Membran 7 und Klebeschicht 12 weiter erhöht wird. Somit sind insgesamt wesentlich höhere mechanische Beanspruchungen der Verbindung zwischen der Klebeschicht 12 und der Membran 7 möglich, ohne dass eine Ablösung der Klebeschicht 12 von der Membran 7 erfolgt.

## Patentansprüche

1. Membran (7) für einen Ultraschallwandler (1), insbesondere für ein Fahrzeug, wobei die Membran auf einer Innenfläche (9) einen Wandlerabschnitt (8) aufweist, auf den ein Wandlerelement, insbesondere ein piezokeramisches Element (10), befestigbar ist, wobei
der Wandlerabschnitt (8) eine Strukturierung (11) zur Vergrößerung der Oberfläche der Membran (7) im Bereich des Wandlerabschnitts (8) aufweist,
**dadurch gekennzeichnet, dass** die Strukturierung (11) eine Mehrzahl von Nuten und/oder Erhebungen (13) umfasst, die radial auf dem Wandlerabschnitt (8) angeordnet sind.

2. Membran (7) nach Anspruch 1, **dadurch gekennzeichnet, dass** die Strukturierung (11) Nuten (13) und/oder Erhebungen umfasst, die als, insbesondere konzentrische, Ringe ausgebildet sind.

3. Membran (7) nach einem der Ansprüche 1 oder 2, **dadurch gekennzeichnet, dass** die Strukturierung (11) sowohl radiale als auch tangentiale Strukturen aufweist.

4. Membran (7) nach einem der Ansprüche 1 bis 3, **dadurch gekennzeichnet, dass** die Strukturierung (11) mindestens eine Nut (13) und/oder Erhebung aufweist, wobei die Nut (13) und/oder Erhebung eine relativ zur Flächennormalen (n) des Wandlerabschnitts (8) geneigte Seitenwand (15) aufweist.

5. Membran (7) nach einem der Ansprüche 1 bis 4, **dadurch gekennzeichnet, dass** die Membran (7) als Teil eines Membrantopfes (2) ausgebildet ist, wobei die Membran (7) den Boden des Membrantopfes (2) ausbildet.

6. Verfahren zur Herstellung einer Membran (7) nach einem der Ansprüche 1 bis 5, **dadurch gekennzeichnet, dass** die Strukturierung (11) durch ein Bürstverfahren und/oder ein Kratzwerkzeug und/oder durch Einprägen und/oder ein Laserverfahren in den Wandlerabschnitt (8) eingebracht wird.

7. Ultraschallwandler (1) umfassend eine Membran (7) nach einem der Ansprüche 1 bis 5, und ein Wandlerelement (10), wobei das Wandlerelement (10) mittels einer Klebeschicht (12) auf dem die Strukturierung (11) aufweisenden Wandlerabschnitt (8) auf der Innenfläche (9) der Membran (7) befestigt ist.

8. Ultraschallwandler nach Anspruch 7, **dadurch gekennzeichnet, dass** die Membran (7) als wesentlichen Bestandteil Aluminium umfasst und die Klebeschicht (12) ein Epoxidharz umfasst

## Claims

1. Diaphragm (7) for an ultrasonic transducer (1), in particular for a vehicle, wherein the diaphragm has a transducer section (8) on an inner surface (9) and a transducer element, in particular a piezoceramic element (10), can be fitted on the said transducer section, wherein the transducer section (8) has a structured portion (11) for increasing the size of the surface of the diaphragm (7) in the region of the transducer section (8), **characterized in that** the structured portion (11) comprises a plurality of grooves and/or raised portions (13) which are arranged in a radial manner on the transducer section (8).

2. Diaphragm (7) according to Claim 1, **characterized in that** the structured portion (11) comprises grooves (13) and/or raised portions which are designed as, in particular concentric, rings.

3. Diaphragm (7) according to one of Claims 1 and 2, **characterized in that** the structured portion (11) has both radial and tangential structures.

4. Diaphragm (7) according to one of Claims 1 to 3, **characterized in that** the structured portion (11) has at least one groove (13) and/or raised portion, wherein the groove (13) and/or raised portion has a side wall (15) which is inclined relative to the surface normal (n) of the transducer section (8).

5. Diaphragm (7) according to one of Claims 1 to 4, **characterized in that** the diaphragm (7) is designed as part of a diaphragm pot (2), wherein the diaphragm (7) forms the base of the diaphragm pot (2).

6. Method for producing a diaphragm (7) according to one of Claims 1 to 5, **characterized in that** the structured portion (11) is made in the transducer section (8) by a brushing process and/or a scratching tool and/or by engraving and/or a laser process.

7. Ultrasonic transducer (1) comprising a diaphragm (7) according to one of Claims 1 to 5 and a transducer element (10), wherein the transducer element (10) is fitted on the inner surface (9) of the diaphragm (7) by means of an adhesive layer (12) on the transducer section (8) which has the structured portion (11).

8. Ultrasonic transducer according to Claim 7, **characterized in that** the diaphragm (7) comprises aluminium as the main constituent part, and the adhesive layer (4) comprises an epoxy resin.

## Revendications

1. Membrane (7) destinée à un transducteur à ultrasons (1), destiné en particulier à un véhicule, la membrane comportant sur une surface intérieure (9) une portion de transducteur (8) sur laquelle un élément de transducteur, en particulier un élément piézo-céramique (10), peut être fixé,
la portion de transducteur (8) présentant une structuration (11) destinée à augmenter la surface de la membrane (7) dans la zone de la portion de transducteur (8),
**caractérisée en ce que** la structuration (11) comprend une pluralité de rainures et/ou d'élévations (13) qui sont disposées radialement sur la portion de transducteur (8).

2. Membrane (7) selon la revendication 1, **caractérisée en ce que** la structuration (11) comprend des rainures (13) et/ou des élévations qui sont conçues comme des anneaux, notamment concentriques.

3. Membrane (7) selon l'une des revendications 1 et 2, **caractérisée en ce que** la structuration (11) comporte à la fois des structures radiales et des structures tangentielles.

4. Membrane (7) selon l'une des revendications 1 à 3, **caractérisée en ce que** la structuration (11) comporte au moins une rainure (13) et/ou une élévation, la rainure (13) et/ou l'élévation comportant une paroi latérale (15) inclinée par rapport à la normale de surface (n) de la portion de paroi (8).

5. Membrane (7) selon l'une des revendications 1 à 4, **caractérisée en ce que** la membrane (7) est conçue comme une partie d'un pot à membrane (2), la membrane (7) formant le fond du pot à membrane (2).

6. Procédé de fabrication d'une membrane (7) selon l'une des revendications 1 à 5, **caractérisé en ce que** la structuration (11) est montée dans la portion de transducteur (8) par un procédé de brossage et/ou un outil de grattage et/ou par gaufrage et/ou un procédé laser.

7. Transducteur à ultrasons (1) comprenant une membrane (7) selon l'une des revendications 1 à 5, et un élément de transducteur (10), l'élément de transducteur (10) étant fixé sur la surface intérieure (9) de la membrane (7) au moyen d'une couche adhésive (12) située sur la portion de transducteur (8) pourvue de la structuration (11).

8. Transducteur à ultrasons selon la revendication 7, **caractérisé en ce que** la membrane (7) comprend comme composant essentiel l'aluminium et la couche adhésive (12) comprend une résine époxy.
